# FASCICULE DE BREVET EUROPEEN

(11) **EP 0 579 532 B1**
(45) Date de publication et mention de la délivrance du brevet: **08.05.1996**
(21) Numéro de dépôt: 93401779.9
(22) Date de dépôt: 08.07.1993
(51) Int. Cl.: F16H 61/26

(54) **Dispositif d'assistance mécanique au passage de vitesses**
Mechanische Hilfseinrichtung zum Erleichtern des Gangschaltens
Mechanical device for assisting the gear change operation

(30) Priorité: 17.07.1992 FR 9208816
(43) Date de publication de la demande: 19.01.1994
(73) Titulaire: Société Anonyme dite: REGIE NATIONALE DES USINES RENAULT, F-92109 Boulogne Billancourt (FR)
(72) Inventeur: Ducrot, Lionel, F-78280 Guyancourt (FR)

(56) Documents cités:
- CH-A- 338 709
- CH-A- 479 417
- FR-A- 1 409 614
- FR-A- 1 518 539

## Description

La présente invention se rapporte aux boîtes de vitesses mécaniques à commande par tringles ou par câbles. Plus précisément, elle concerne un dispositif d'assistance mécanique au passage des vitesses, destiné à réduire leurs temps de passage pour augmenter le confort de conduite d'un véhicule automobile, équipé d'une boîte de vitesses mécanique.

Sur la plupart des boîtes de vitesses à commande par tringles ou par câbles connues, la synchronisation et le passage des vitesses s'effectue par l'intermédiaire d'un axe de commande de passage. Cet axe, pénétrant à l'intérieur de la boîte de vitesses, est actionné par le câble ou la tringle correspondante. Selon une disposition largement répandue, l'extrémité de la tringle ou du câble de passage, peut porter une rotule, articulée sur la première extrémité d'un levier solidaire en rotation de l'axe de commande. Le câble ou la tringle, travaillant en poussée et en traction, entraînent en rotation l'axe de commande de passage par l'intermédiaire du levier. Une telle liaison mécanique par levier entre la tringle ou le câble et l'axe de commande donne des résultats satisfaisants quant à la précision de la commande, mais est totalement dépourvue d'élasticité.

Par ailleurs, le mouvement de translation du câble ou de la tringle est toujours transmis de façon linéaire aux organes internes de synchronisation et de passage des vitesses, dont nous rappellerons brièvement le fonctionnement :
- sous l'action de l'axe de commande de passage et de la fourchette sélectionnée par les organes de sélection, le baladeur repousse l'anneau du synchroniseur par l'intermédiaire du ou des ressorts du synchroniseur sur le cône du pignon fou. L'anneau du synchroniseur, entraîné par frottement par le pignon fou, se déporte angulairement par rapport au moyeu de synchroniseur ou "vire". Le (ou les) ressort(s) du synchroniseur s'efface(nt), et permet(tent) au baladeur de venir en appui sur l'anneau du synchroniseur par l'intermédiaire de leurs entrées de dentures respectives. La friction commencée entre l'anneau du synchroniseur et le cône du pignon fou est alors augmentée par l'effort produit jusqu'à ce qu'il n'y ait plus de déplacement relatif entre ces deux pièces : la première phase du passage, à savoir la synchronisation, est alors achevée.
- sous la poussée du baladeur, l'anneau de synchronisation effectue alors son "dévirage", donnant ainsi l'autorisation du crabotage du baladeur avec le pignon fou ; cependant le crabotage ne s'effectue pas instantanément, car le baladeur doit se déplacer en direction du pignon fou : cette phase intermédiaire de déplacement du baladeur en direction du pignon fou, appelée "vol libre", est ressentie comme un flottement du mécanisme par le conducteur.
- le "vol libre" s'achève lorsque la denture du baladeur attaque celle du pignon fou, effectuant le crabotage de ces deux éléments.

Comme indiqué plus haut, les mécanismes de commande de passage des vitesses connus présentent une grande rigidité quant à la transmission de l'effort nécessaire pour assurer la synchronisation et le crabotage des vitesses, ceci malgré la présence de pièces noyées dans du caoutchouc, notamment au niveau des articulations.

Par la publication FR-A-1 518 539, relative à une articulation élastique à rotule, on connaît un dispositif visant à introduire une certaine souplesse dans la commande du passage des vitesses. Selon ce dispositif, l'extrémité du câble ou de la tringle de commande de passage, actionné à partir du levier de vitesses,est solidaire d'un boitier de forme allongée, à l'intérieur duquel, un axe élastique recevant une rotule portée par l'extrémité d'un levier solidaire en rotation de l'axe de commande de vitesses, peut coulisser sous le contrôle de deux ressorts antagonistes. Ce dispositif permet notamment d'empêcher la transmission des vibrations du moteur au levier de changement de vitesses, et d'éviter l'échappement,d'une vitesse enclenchée, pouvant résulter de l'amplification d'oscillations et de vibrations, notamment au niveau du levier de changement de vitesses. Cependant un tel dispositif n'est malheureusement pas en mesure de supprimer certains désagréments des mécanismes de commande de passage traditionnels :
- temps de synchronisation ou de vol libre jugé trop long,
- effort à fournir trop important, se traduisant par une synchronisation paresseuse,
- sensation désagréable de grattement lors du crabotage.

La présente invention a pour but de supprimer l'ensemble de ces désagréments. Elle propose à cet effet un mécanisme d'articulation élastique des organes de commande du passage des vitesses, constituant un véritable dispositif d'assistance mécanique au passage des vitesses.

L'invention concerne un dispositif d'assistance mécanique au passage des vitesses sur une boîte de vitesses à commande par câbles ou par tringles, à l'intérieur de laquelle les ordres de passage sont transmis par un axe de commande de passage entraîné en rotation par le câble ou la tringle de commande. Ce dispositif est caractérisé en ce que la liaison mécanique entre le câble ou la tringle de commande de passage et l'axe est assurée par deux pièces articulées dont le débattement relatif est contrôlé élastiquement par un ressort qui accumule de l'énergie en se comprimant pendant la phase de synchronisation, et libère l'énergie accumulée, à l'issue de celle-ci.

Selon un mode de réalisation de l'invention, les deux pièces articulées sont constituées respectivement par une platine solidaire en rotation de l'axe de commande de passage, et par un levier, pivotant autour d'un axe d'articulation sur la platine, et relié à l'extrémité du câble ou de la tringle de passage par une rotule.

Selon un mode de réalisation de l'invention, le ressort s'étend transversalement à l'axe longitudinal de la platine et du levier, de façon telle que leur écartement relatif comprime le ressort.

Selon un mode de réalisation de l'invention, le levier est disposé sur la platine.

Selon un mode de réalisation de l'invention, le levier est disposé sous la platine.

Selon un mode de réalisation de l'invention, le ressort est maintenu entre la platine et le levier à l'aide de lèvres latérales.

Selon un mode de réalisation de l'invention, le ressort est maintenu entre la platine et le levier à l'aide de deux tétons de centrage engagés à chaque extrémité du ressort.

Selon un mode de réalisation de l'invention, le débattement angulaire du levier sur la platine est limité par la course de déplacement d'un axe de guidage serti sur la platine, le long d'une fente incurvée ménagée sur le levier.

Selon un mode de réalisation de l'invention, le débattement angulaire du levier sur la platine est limité par deux pattes latérales appartenant à la platine et rabattues de part et d'autre du levier.

L'invention sera mieux comprise à la lecture de la description suivante d'un mode de réalisation particulier de celle-ci, en liaison avec les dessins annexés sur lesquels :
- la figure 1 situe l'implantation du dispositif d'assistance de l'invention vis-à-vis du levier de changement de vitesses et de la boîte de vitesses d'un véhicule,
- les figures 2a et 2B, relatives à un premier mode de réalisation de l'invention, sont respectivement une vue de dessus du dispositif d'assistance, et une coupe verticale de celui-ci le long de a-b, prolongée par une vue en élévation le long de b-c,
- les figures 3A et 3B, relatives à un second mode de réalisation de l'invention, sont respectivement une vue de dessus et une vue en élévation latérale du mécanisme d'assistance.

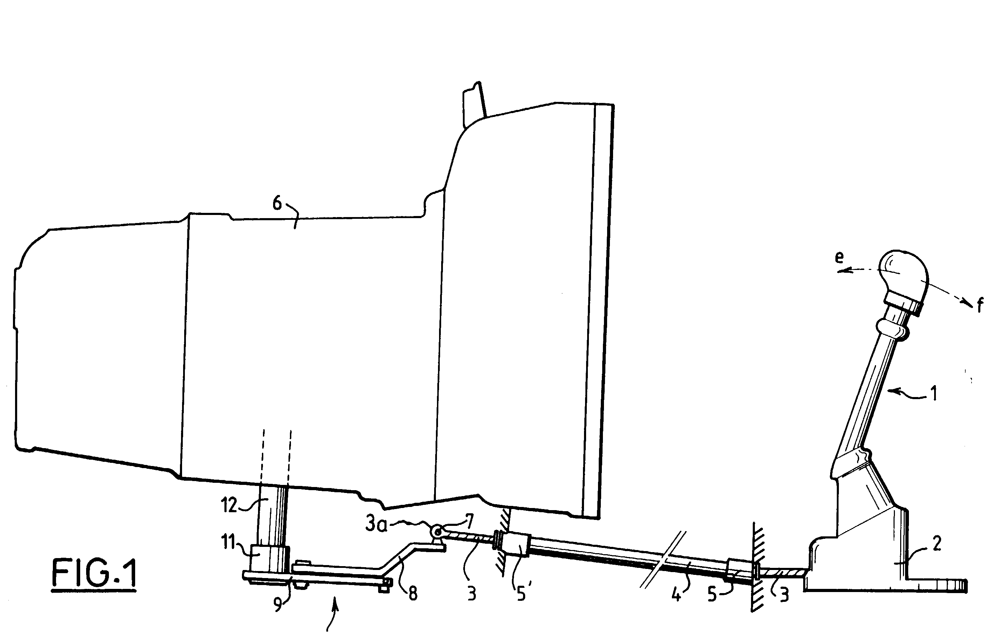

En se reportant à la figure 1, on reconnaît le levier 1 de changement de vitesses d'un véhicule automobile, pouvant pivoter de façon classique sur son socle 2 en décrivant un arc de cercle e-f, pour assurer le passage des vitesses. Un câble 3, fixé à l'extrémité inférieure du levier 1 non représenté, s'étend en direction de la boîte de vitesses 6 à travers une gaine 4 immobilisée par deux arrêts de gaine 5, 5'. L'extrémité du câble 3 opposée au levier porte un oeillet 3a, articulé sur une rotule 7 portée par un premier élément 8 appartenant au mécanisme d'assistance 10 de l'invention. Un second élément 9 du dispositif 10 porte un manchon tubulaire 11 fixé sur l'axe 12 de commande de passage des vitesses, pénétrant à l'intérieur de la boîte de vitesses 6.

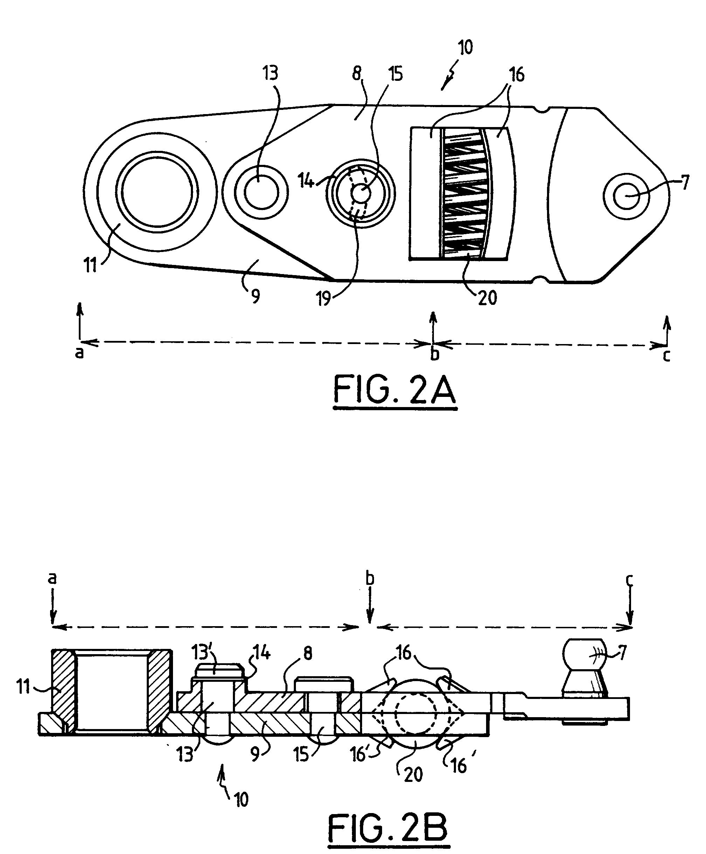

Sur les figures 2A et 2B relatives au premier mode de réalisation de l'invention (illustré par la figure 1), on retrouve le premier élément constitué par le levier 8 qui porte la rotule 7 sur une extrémité, et peut pivoter autour d'un axe d'articulation 13 sur la platine 9 constituant le second élément mentionné plus haut. L'extrémité de la platine 9 opposée à la rotule 7, porte le manchon 11. Le pivotement du levier 8 sur la platine 9 est limité angulairement par le débattement de l'axe de guidage 15, également serti sur la platine 9, à l'intérieur d'une fente incurvée 19, ménagée sur le levier 8. Le manchon tubulaire 11 pourra avantageusement être soudé électriquement sur la platine 9. Une rondelle élastique 14 assurera par exemple le rattrapage du jeu existant entre la tête 13' de l'articulation 13 et le levier 8. Enfin un ressort 20, maintenu latéralement par des lèvres 16, 16' respectivement fixées sur le levier 8 et sur la platine 9 exerce une force de rappel du levier 8 en position médiane vis-à-vis de la platine 9. Le ressort 20 est disposé transversalement à l'axe longitudinal du levier 8 et de la platine 9, de façon à ce que leur écartement relatif entraine sa compression.

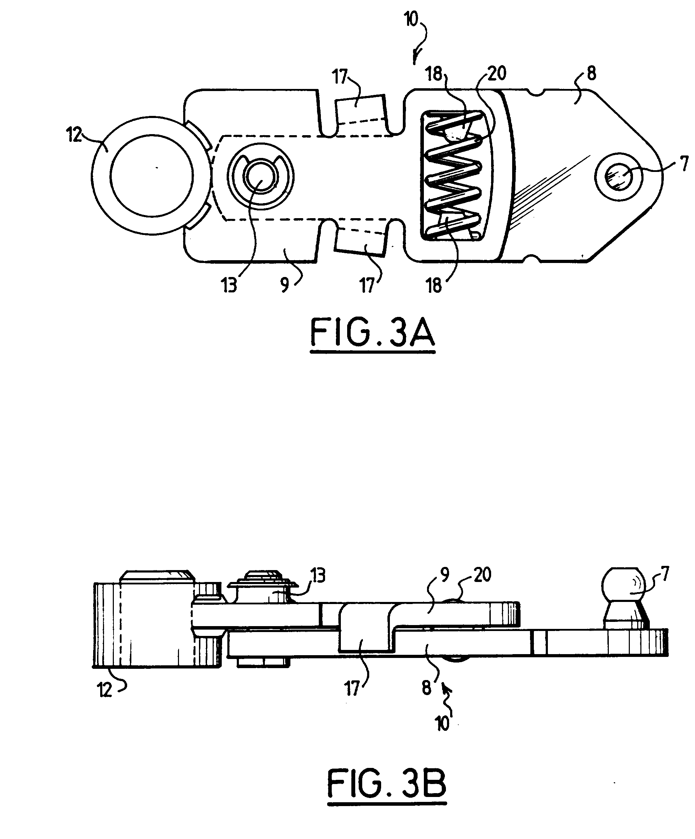

Sur le mode de réalisation de l'invention illustré par les figures 3A et 3B on retrouve les éléments principaux du dispositif d'assistance 10, à savoir une platine 9, un levier 8, le manchon 12, l'axe d'articulation 13, 14, la rotule 7 et le ressort 20. La position relative de la platine 9 et du levier 8 est toutefois inversée, puisque ce dernier s'étend désormais en dessous de la platine 9. Par ailleurs, les moyens de limitation du débattement relatif de ces deux éléments ne sont pas les mêmes, puisque l'axe de guidage 15 a été remplacé par deux pattes latérales 17 appartenant à la platine 9 et rabattues vers le bas, de part et d'autre du levier 8, qui remplissent la même fonction. Enfin le ressort 20 n'est plus maintenu par des lèvres latérales, mais son maintien en position entre la platine 9 et le levier 8 est simplement assuré par deux tétons de centrage 18.

L'intérêt du dispositif d'assistance mécanique au passage des vitesses, conforme aux deux modes de réalisation qui viennent d'être décrits, est le suivant. Outre la transmission du mouvement entre le câble et l'axe de commande du passage, ils assurent une fonction d'accumulateur d'énergie, grâce à la compression temporaire et à la détente du ressort 20 :
- pendant la phase de synchronisation, lorsque le baladeur, en appui contre l'anneau de synchronisation, n'avance plus, le déplacement du câble et du levier par le conducteur comprime le ressort, en accumulant ainsi de l'énergie au sein du dispositif;
- lorsque l'anneau de synchronisation effectue son "dévirage" le ressort libère l'énergie accumulée et propulse le baladeur en direction du pignon fou; le temps nécessaire à cette course est ainsi considérable réduit;
- le baladeur reçoit du ressort une impulsion toujours supérieure à celle que pourrait lui transmettre un déplacement rapide du levier de changement de vitesses par le conducteur,

En conclusion, il est important de noter que l'adaptation du dispositif de l'invention sur l'axe commandant le passage de toutes les vitesses, permet de bénéficier de son assistance mécanique au passage de tous les rapports de la boîte de vitesses.

## Revendications

1. Dispositif d'assistance mécanique au passage de vitesses sur une boîte de vitesses à commande par câbles ou par tringles, à l'intérieur de laquelle les ordres de passage sont transmis par un axe de commande de passage (12) entraîné en rotation par le câble ou la tringle (3) de commande, caractérisé en ce que la liaison mécanique entre le câble ou la tringle (3) de commande de passage et l'axe (12) est assurée par deux pièces articulées (8, 9) dont le débattement relatif est contrôlé élastiquement par un ressort (20) qui accumule de l'énergie en se comprimant pendant la phase de synchronisation et libère l'énergie accumulée, à l'issue de celle-ci.

2. Dispositif d'assistance mécanique selon la revendication 1, caractérisé en ce que les deux pièces articulées (8, 9) sont constituées respectivement par une platine (9) solidaire en rotation de l'axe (12) de commande de passage, et par un levier (8) pivotant autour d'un axe d'articulation (13) sur la platine, et relié à l'extrémité du câble ou de la tringle (3) de passage par une rotule (7).

3. Dispositif d'assistance mécanique selon la revendication 2, caractérisé en ce que le ressort (20) s'étend transversalement à l'axe longitudinal de la platine (9) et du levier (8), de façon telle que leur écartement relatif comprime le ressort (20).

4. Dispositif d'assistance mécanique selon les revendications 2 ou 3, caractérisé en ce que le levier (8) est disposé sur la platine (9).

5. Dispositif d'assistance mécanique selon les revendications 2 ou 3, caractérisé en ce que le levier (8) est disposé sous la platine (9).

6. Dispositif d'assistance mécanique selon l'une quelconque des revendications 2 à 5, caractérisé en ce que le ressort (20) est maintenu entre la platine (9) et le levier (8) à l'aide de lèvres latérales (16, 16').

7. Dispositif d'assistance mécanique selon l'une quelconque des revendications 2 à 5, caractérisé en ce que le ressort (15) est maintenu entre la platine (9) et le levier (8) à l'aide de deux tétons de centrage (18) engagés à chaque extrémité du ressort (20).

8. Dispositif d'assistance mécanique selon l'une quelconque des revendications 2 à 7, caractérisé en ce que le débattement angulaire du levier (8) sur la platine (9) est limité par la course de déplacement d'un axe de guidage (15) serti sur la platine (9). le long d'une fente (19) incurvée ménagée sur le levier (8).

9. Dispositif d'assistance mécanique selon l'une quelconque des revendications 2 à 8, caractérisé en ce que le débattement angulaire du levier (8) sur la platine (9) est limité par deux pattes latérales (17) appartenant à la platine (9) et rabattues de part et d'autre du levier (8).

## Patentansprüche

1. Mechanische Hilfseinrichtung zum Einlegen der Gänge eines mittels Seilen oder mittels eines Gestänges schaltbaren Getriebes, in dem die Schaltreihenfolge durch eine Schaltsteuerwelle (12) übertragen wird, die durch das Seil oder das Gestänge (3) in Drehungen versetzt wird, dadurch gekennzeichnet, daß die mechanische Verbindung zwischen Seil oder Gestänge (3) zur Steuerung des Schaltvorganges und der Welle (12) aus zwei angelenkten Teilen (8, 9) besteht, deren Relativverschiebung in elastischer Weise durch eine Feder (20) gesteuert wird, welche Energie dadurch aufnimmt, daß sie während der Synchronisationsphase komprimiert wird und die die aufgenommene Energie nach der Beendigung der Aufnahme wieder abgibt.

2. Mechanische Hilfseinrichtung nach Anspruch 1, dadurch gekennzeichnet, daß die beiden angelenkten Teile (8, 9) aus einer Halteplatte (9), die drehfest mit der Schaltsteuerwelle (12) verbunden ist und aus einem Hebel (8), der schwenkbar um eine Gelenkachse (13) an der Halteplatte befestigt ist, bestehen, wobei er mit dem Ende des Seiles oder des Schaltgestänges (3) über ein Kugelgelenk (7) verbunden ist.

3. Mechanische Hilfseinrichtung nach Anspruch 2, dadurch gekennzeichnet, daß sich die Feder (20) quer zur Längsachse der Halteplatte (9) und des Hebels (8) erstreckt, so daß ihre Relativbewegung die Feder (20) komprimiert.

4. Mechanische Hilfseinrichtung nach Ansprüchen 2 oder 3, dadurch gekennzeichnet, daß der Hebel (8) auf der Halteplatte (9) angeordnet ist.

5. Mechanische Hilfseinrichtung nach Ansprüchen 2 oder 3, dadurch gekennzeichnet, daß der Hebel (8) unter der Halteplatte (9) angeordnet ist.

6. Mechanische Hilfseinrichtung nach einem der Ansprüche 2 bis 5, dadurch gekennzeichnet, daß die Feder (20) zwischen der Halteplatte (9) und dem Hebel (8) mittels seitlicher Lippen (16, 16') gehalten ist.

7. Mechanische Hilfseinrichtung nach einem der Ansprüche 2 bis 5, dadurch gekennzeichnet, daß die Feder (20) zwischen der Halteplatte (9) und dem Hebel (8) mit Hilfe zweier Zentrierzapfen (18) gehalten ist, die in die beiden Enden der Feder (20) eingreifen.

8. Mechanische Hilfseinrichtung nach einem der Ansprüche 2 bis 7, dadurch gekennzeichnet, daß die Winkelverschiebung des Hebels (8) auf der Halteplatte (9) durch den Verschiebeweg einer Führungsachse (15) begrenzt ist, die an der Halteplatte (9) angeordnet ist und in einen gekrümmten im Hebel (8) ausgebildeten Schlitz (19) eingreift.

9. Mechanische Hilfseinrichtung nach einem der Ansprüche 2 bis 8, dadurch gekennzeichnet, daß die Winkelverschiebung des Hebels (8), auf der Halteplatte (9) durch zwei seitliche Laschen (17) begrenzt ist, die zur Halteplatte (9) gehören und die den Hebel (8) beidseits umgreifen.

## Claims

1. A mechanical gear shift booster for a gearbox controlled by cables or rods, inside which gear shift commands are transmitted by a selector shaft (12) which is rotated by the control cable or rod (3), characterized in that the mechanical linkage between the gear shift control cable or rod (3) and the shaft (12) is effected by two articulated members (8, 9) whose relative movement is elastically controlled by a spring (20) which stores energy when it compresses during the synchronization phase and releases the stored energy at the conclusion thereof.

2. A mechanical booster according to claim 1, characterized in that the two articulated members (8, 9) are respectively constituted by a plate (9) which is solid in rotation with the selector shaft (12) and by a lever (8) which pivots about a hinge pin (13) on the plate, connected to the end of the gear shift cable or rod (13) by a pivot pin (7).

3. A mechanical booster according to claim 2, characterized in that the spring (20) extends transversely to the longitudinal axis of the plate (9) and the lever (8) such that their relative spreading compresses the spring (20).

4. A mechanical booster according to claim 2 or claim 3, characterized in that the lever (8) is located above the plate (9).

5. A mechanical booster according to claim 2 or claim 3, characterized in that the lever (8) is located beneath the plate (9).

6. A mechanical booster according to any one of claims 2 to 5, characterized in that the spring (20) is held between the plate (9) and the lever (8) by means of lateral lips (16, 16').

7. A mechanical booster according to any one of claims 2 to 5, characterized in that the spring (20) is held between the plate (9) and the lever (8) by means of two centering studs (18) engaged at each end of the spring (20).

8. A mechanical booster according to any one of claims 2 to 7, characterized in that the angular movement of the lever (8) on the plate (9) is limited by the displacement path of a guide pin (15) fixed on the plate (9) and guided in an inwardly curved slit (19) provided on the lever (8).

9. A mechanical booster according to any one of claims 2 to 8, characterized in that the angular movement of the lever (8) on the plate (9) is limited by two lateral tabs (17) forming part of the plate (9) and bent downwardly to either side of the lever (8).
